# EUROPÄISCHE PATENTSCHRIFT

(11) **EP 1 159 636 B1**
(45) Veröffentlichungstag und Bekanntmachung des Hinweises auf die Patenterteilung: **28.05.2003**
(21) Anmeldenummer: 00925048.1
(22) Anmeldetag: 16.03.2000
(51) Int. Cl.: G01S 7/481, G01S 17/89

(54) **ORTSAUFLÖSENDES ABSTANDSMESSSYSTEM**
RESOLUTING RANGE FINDING DEVICE
SYSTEME DE MESURE DE DISTANCE A RESOLUTION LOCALE

(30) Priorität: 18.03.1999 DE 19912196
(43) Veröffentlichungstag der Anmeldung: 05.12.2001
(73) Patentinhaber: SIEMENS AKTIENGESELLSCHAFT, 80333 München (DE)
(72) Erfinder: DOEMENS, Günter, D-83607 Holzkirchen (DE); MENGEL, Peter, D-82223 Eichenau (DE)
(86) Internationale Anmeldenummer: DE0000814
(87) Internationale Veröffentlichungsnummer: WO00055642

(56) Entgegenhaltungen:
- US-A- 4 229 103
- US-A- 4 319 332
- US-A- 5 784 023
- US-A- 5 856 667

## Beschreibung

Die Erfindung betrifft ein ortsauflösendes Abstandsmeßsystem zur Erstellung von dreidimensionalen Objekten. Derartige Systeme werden vorzugsweise zur Identifizierung von Personen oder Gegenständen zur Zugangskontrolle oder für allgemeine Überwachungsaufgaben eingesetzt. Dreidimensional aufnehmende und verarbeitende Sensorsysteme gewinnen für verschiedenste Aufgabenstellungen in der industriellen Technik zunehmend an Bedeutung. Die denkbaren Anwendungen sind äußerst vielseitig und umfangreich und müssen von einer neuen Generation von optischen Sensoren für die industrielle Meßtechnik unterstützt werden.

Bekannte optische Radarsysteme wie beispielsweise Laserradar basieren entweder auf dem Prinzip der Laserimpuls-Laufzeitmessung oder auf der Bestimmung der Phasenindifferenz von moduliertem Laserlicht zur Ableitung der Objektdistanz. Zum Aufbau eines dreidimensionalen bildgebenden Systems sind zusätzlich mechanische Scan-Einrichtungen erforderlich. Dies führt zu einem relativ teuren elektronischen und mechanischen Aufwand, der den Einsatz solcher dreidimensionalen Systeme auf wenige Spezialanwendungen beschränkt.

Ferner sind Verfahren bekannt, bei denen mit Kurzzeit-Laserbeleuchtung und elektro-optischen Schaltern sowie mit CCD-Kameras Tiefenphotos gewonnen werden (gated view). Nachteile dieser Sensoren bestehen in einer hohen Laserleistung sowie in teuren elektro-optischen Shuttern. Nachdem CCD-Kameras in der Regel nach der Fernsehnorm betrieben werden, lassen sich nur lange Auslesezeiten erzielen.

US-A-4 229 103 offenbart ein ortsauflösendes System zur Positionsbestimmung eines Zieles bei der Schießsimulation auf der Basis von Lichtlaufzeitmessungen, bestehend aus einer eindimensionalen Anordnung von modulierbaren Lichtquellen, einem Festkörperbildwandler mit Empfangselementen, die zu den Lichtquellen korrespondierend angeordnet sind; und einer Optik mit einem Teilerspiegel, die Beleuchtungs- und Abblidungsstrahlen derart lenkt, daß ein von einer Lichtquelle ausgehender Beleuchtungsstrahl einen Objektpunkt beleuchtet und der dazugehörige Abbildungsstrahl ein korrespondierendes Empfangselement trifft. Mit der gleichzeitigen Ansteuerung der Lichtquellen wird eine homogene Ausleuchtung des Erfassungsbereiches erreicht.

Der Erfindung liegt die Aufgabe zugrunde, durch Vermeidung der Nachteile des Standes der Technik ein ortsauflösendes Ab-standsmeßsystem bereitzustellen, mit dem schnell und kostengünstig dreidimensionale Bilder erzeugbar sind.

Die Lösung dieser Aufgabe geschieht durch die Merkmalskombination entsprechend Anspruch 1.

Ein wesentliches Merkmal der Erfindung besteht darin, die Realisierung des Abstandsmesssystems ausschließlich in Festkörpertechnologie auszuführen. Weiterhin wird eine.einzelne relativ starke Lichtquelle ersetzt durch eine beispielsweise matrixförmige Anordnung von schwächeren Lichtquellen. Somit wird die Lichtleistung im Verhältnis zu der vormals großen Leistung einer einzigen reduziert im Verhältnis der vollflächigen Ausleuchtung relativ zur Anzahl der Bildpunkte. Das Abstandsmeßsystem kommt ohne bewegte Teile aus. Grenzen von Laserschutzbestimmungen können ohne weiteres eingehalten werden. Durch die korrespondierende Anordnung von Lichtquellen einerseits und Empfangselementen eines Festkörperbildwandlers andererseits können die durch eine Lichtquelle beleuchteten und damit definierten Objektpunkte mit genauer Zuordnung durch ein Empfangselement des Festkörperbildwandlers jeweils empfangen und hinsichtlich des Abstandes ausgewertet werden.

Durch die Aufteilung einer relativ großen Lichtleistung auf eine Vielzahl von Lichtquellen mit einer vorgegebenen Anordnung resultieren Vorteile wie eine kürzere Anstiegszeit der Amplitude des Lichtes, eine höhere Genauigkeit der Messung und einfache Einhaltung von Grenzen beispielsweise aus Laserschutzbedingungen.

Das Abstandsmeßsystem ist pixelauflösend, so daß einzelne Objektpunkte bzw. deren Entfernung oder deren Höhenwert differenziert abgebildet werden können. Dies wird insbesondere durch eine vorteilhafte Ausgestaltung erreicht, die vorsieht, daß das System mit wahlfrei ansteuerbaren Lichtquellen und wahlfrei auslesbaren Empfangselementen versehen ist. Die Korrespondenz zwischen Lichtquellen und Empfangselementen kann vorteilhafterweise derart variiert werden, daß nicht nur eine 1:1-Zuodnung vorliegt, sondern daß beispielsweise eine Lichtquelle mit mehreren zu einer Gruppe zusammengefaßten Empfangselementen korrespondiert. Genauso kann eine Gruppe von Lichtquellen ein einzelnes Empfangselement bedienen.

Das Ergebnis einer Messung besteht in einem erzeugten dreidimensionalen Bild eines Objektes, einem Höhenbild, oder in Form eines Schnittbildes, welches die äußere Form des Objektes an einem bestimmten Schnitt des Objektes mit den Beleuchtungsstrahlen wiedergibt.

Eine vollflächige Beleuchtung eines Objektes geschieht zweckmäßigerweise mit einer vollflächigen Anordnung mit Lichtquellen und Empfangselementen jeweils für sich. Es ist vorteilhaft, diese Anordnungen jeweils rechtwinklig in Form einer Matrix auszubilden. Besteht kein Erfordernis einer vollflächigen Ausleuchtung bzw. Messung eines Objektes, so können die Lichtquellen und die Empfangselemente aufgabenspezifisch angeordnet sein. Dies bedeutet beispielsweise, daß unter Beibehaltung der Korrespondenz zwischen Lichtquellen und Empfangselementen jeweils eine bestimmte Linie oder Fläche als deren Anordnung ausgewählt wird, wobei eine entsprechende Linie oder Fläche am Objekt detektiert wird. Unter aufgabenspezifischer Ausführung dieser Anordnung ist zu verstehen, daß die korrespondierenden Anordnungen der Lichtquelle und der Empfangselemente an die Form des Objektes oder an wahrscheinliche Positionen des Objektes angepaßt sind.

Es ist vorteilhaft, als Lichtquellen modulierbare Laserdioden einzusetzen. Die Ausführung des Festkörperbildwandlers in Form eines CMOS (Metalloxid-Halbleiter)-Bildwandlers ist verbunden mit einer kostengünstigen Ausführung, die ein schnelles und zuverlässiges, wahlfreies Auslesen einzelner Empfangselemente ermöglicht.

Der Einsatz eines ortsauflösenden Abstandsmeßsystems nach der Erfindung zur Gebäudeeingangssicherung ist mit besonderen Vorteilen verbunden. Ein entsprechender Sensor arbeitet mit Licht und nicht mit eventuell schädigenden anderen Strahlen. Werden Laserdioden eingesetzt, so ist deren einzelne Lichtleistung derart gering, daß Laserschutzbestimmungen ohne weiteres eingehalten werden. Die Anordnung bzw. Gestaltung der Sende- und Empfangseinheiten des Meßsystems können objektspezifisch angepaßt werden.

Im folgenden werden anhand der begleitenden schematischen Zeichnungen die Erfindung nicht einschränkende Ausführungsbeispiele beschrieben.
- Figur 1: zeigt einen optischen dreidimensional aufnehmenden Sensor mit bildpunktweiser Beleuchtung und Auslesung, wobei ein dreidimensionales Objekt vollflächig beleuchtet werden kann,
- Figur 2: zeigt ein System entsprechend Figur 1 mit an das Meßproblem angepaßter Ausgestaltung der Anordnung der Lichtquelle und der Empfangselemente,
- Figur 3: zeigt eine schematische Anordnung von Laserdioden relativ zu einer Optik und eine Anordnung von CMOS-Bildwandlerelementen,
- Figur 4: zeigt eine Sende- und Empfangseinheit über einer Gebäudeeingangstür zur Gebäudesicherung.

Die Aufnahme und Erstellung von dreidimensionalen Bildern spielt vor allem für die Identifizierung oder für die Zugangskontrolle, also allgemein für Überwachungsaufgaben, eine wesentliche Rolle. Somit kommt der schnellen, kostengünstigen und robusten Erfassung von dreidimensionalen Bildern in der industriellen Sensorik künftig eine Schlüsselrolle zu. Eine wesentliche Voraussetzung hierfür ist vor allen Dingen die Realisierung dieser Sensorik ausschließlich in Festkörpertechnologie. Die daraus resultierenden Anwendungen sind äußerst vielseitig und umfangreich und eröffnen eine neue Generation von optischen Sensoren für die industrielle Meßtechnik. Diese dreidimensionalen Mikrosysteme finden beispielsweise Anwendung in der Verkehrs- und Raumüberwachung sowie in der Führung von Transportvorgängen. Neben der Identifizierung von Objekten können auch Geschwindigkeiten gemessen werden. Ein Materialfluß kann überwacht und automatisiert werden.

Das hier vorgeschlagene Abstandsmeßsystem beruht auf der Basis, daß konsequente funktionale und räumliche Integration von Mikroelektronik, Photonik und Optik in einem Mikrosystem ausschließlich in Festkörpertechnologie vorgenommen wurden. Durch die Mikroelektronik, insbesondere die CMOS-Mikroelektronik, wird es möglich, integrierende, photosensitive Anordnungen mit extrem kurzen Integrationszeiten, beispielsweise 50 ns, zu realisieren und damit indirekt über die empfangene Intensität von Laserimpulsen auf deren Laufzeit bzw. auf den Abstand des Objektpunktes vom Meßsystem zu schließen. Durch eine mehrfache Wiederholung einer Pulsbelichtung, Integration und Verknüpfung, läßt sich eine Reduzierung der insgesamt erforderlichen Laserleistung erzielen.

Der Photonik kommt in diesem System eine ganz entscheidende Rolle zu. An die Laserlichtquelle müssen hohe Anforderungen hinsichtlich Anstiegszeit und Konstanz gestellt werden. Die Anstiegszeit sollte kleiner als 1 ns sein. Eine deutliche Reduzierung dieses Problemkreises wird durch den neuen Ansatz der Synchronisierung von objektsektionaler Beleuchtung und Adressierung korrespondierender Bereiche aus dem Sensor-Array erzielt. Darunter ist die korrespondierende Ausgestaltung des Meßsystems zu verstehen, die einzelne Lichtquellen, die entsprechende Objektpunkte beleuchten, korrespondierenden Empfangselementen zuordnet.

Dem Prinzip liegt die Überlegung zugrunde, daß bei der Ausnutzung des der CMOS-Technologie eigenen wahlfreien Bildzugriffs (Random Access) im Extremfall nur das Pixel beleuchtet wird, dessen Intensität momentan ausgelesen wird. Damit ist das System gleichzeitig pixelauflösend und auf bei mechanisches Scannen kann verzichtet werden. Die dann auf mehrere und deutlich leistungsschächere sowie seriell arbeitenden Lichtquellen bzw. Laserdioden verteilte Lichtleistung verringert die Probleme von Anstiegszeiten, Stromversorgung sowie Kosten und Laserschutzaspekten drastisch. Die mit dem offenbarten Meßsystem erreichbaren Meßunsicherheiten von ± 5 cm in einem Meßbereich von 0,5 bis 5 m sind realistisch.

Bei dem seriellen Betrieb von einzelnen Laserdioden mit den korrespondierenden Empfangselementen können wiederum am Objektort wesentlich höhere Leuchtdioden zugelassen werden als bei einer flächenhaften Beleuchtung ohne die Laserschutzbestimmungen zu verletzen. Dies führt zu einem deutlich verbesserten Signal/Rauschverhältnis an den Empfangselementen und damit zu einer deutlich erhöhten Leistungsfähigkeit des gesamten Systems.

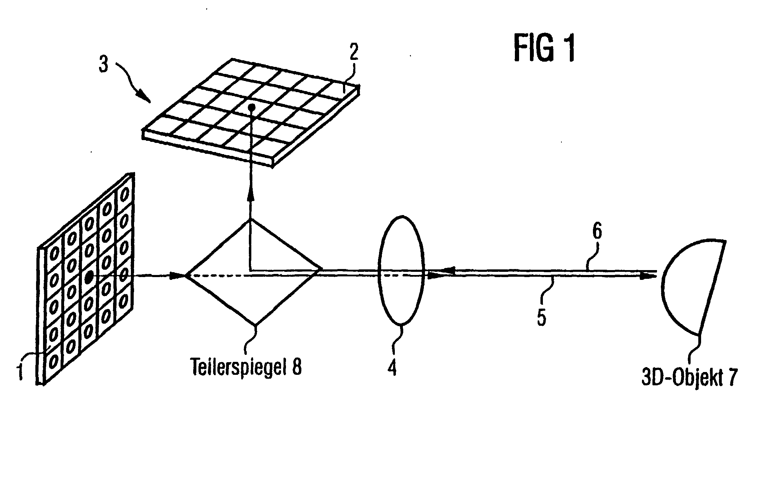

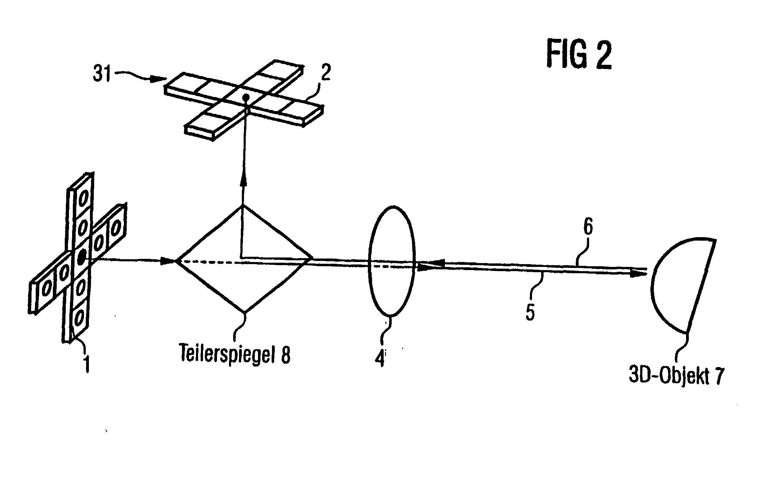

Die Figuren 1 und 2 zeigen ein ortsauflösendes Abstandsmeßsystem, das linksseitig eine Anordnung von Lichtquellen 1 enthält, wobei ausgesandte Beleuchtungsstrahlen 5 über einen Teilerspiegel 8 und eine Optik 4 geleitet werden und ein dreidimensionales Objekt 7 zumindest partiell beleuchten. Vom Objekt 7 reflektierte Abbildungsstrahlen 6 werden über die gleiche Optik 4 und den Teilerspiegel 8 auf einen Festkörperbildwandler 3, 31 geleitet und durch zu den Lichtquellen 1 korrespondierende Empfangselemente 2 ausgewertet. Die Auswertung geschieht opto-elektronisch und ergibt ein vollständiges oder partielles Höhenbild des Objektes 7. Die in Figur 1. dargestellte Form der Anordnungen der Lichtquellen 1 und der Empfangselemente 2 in Form einer rechtwinkligen Matrix ist dazu geeignet, ein vollständiges dreidimensionales Bild eines Objektes 7 aufzunehmen. Die beschriebene partielle Beleuchtung durch serielle Betätigung der Lichtquellen 1 führt insgesamt zur vollständigen Aufnahme des Objektes 7. Das serielle Ansprechen der Lichtquellen 1 kombiniert mit dem seriellen Auslesen der korrespondierenden Empfangselemente 2 kann mit hoher Geschwindigkeit durchgeführt werden. Wie in Figur 1 dargestellt, bedeutet die erwähnte Korrespondenz, daß ein mittig in der Anordnung der Lichtquellen 1 generierter Beleuchtungsstrahl 5 nach der Reflektion am Objekt 7 über den Teilerspiegel 8 in das mittig plazierte Empfangselement 2 des Festkörperbildwandlers 3 gelangt. Dies gilt in entsprechender Weise für sämtliche anderen Lichtquellen 1 und Empfangselemente 2. Durch den Einsatz einer Vielzahl von Lichtquellen 1 mit einer korrespondierenden Anzahl von Empfangselementen 2, kombiniert mit einer seriellen Beleuchtung des Objektes 7 ergeben sich keinerlei Probleme für die Stromversorgung der Lichtquellen für die Einhaltung von Grenzen einer Laserschutzbestimmung oder einer notwendigen kurzen Anstiegszeit bei der Modulation der Lichtquellen 1. Dies ist im Gegensatz zum Stand der Technik zu betrachten, bei dem eine einzige Lichtquelle mit hoher Leistung eingesetzt wird.

Figur 2 zeigt eine Anordnung entsprechend Figur 1, bei der die Lichtquellen 1 und der Festkörperbildwandler 31 aufgabenspezifisch ausgebildet sind. Die in der Darstellung gewählte Ausbildung in Form eines Kreuzes beleuchtet auf dem Objekt 7 lediglich ein ähnliches Kreuz, welches über die ebenfalls als Kreuz ausgebildete Anordnung von Empfangselementen 2 auswertbar ist. Somit können wesentliche charakteristische Merkmale eines Objektes 7 detektiert werden, wobei eine anschließende Kategorisierung möglich ist. Dies bedeutet, dass beispielsweise bei einem Gesicht bestimmte Konturen betrachtet werden, ohne das gesamte Gesicht zu beleuchten und auszuwerten.

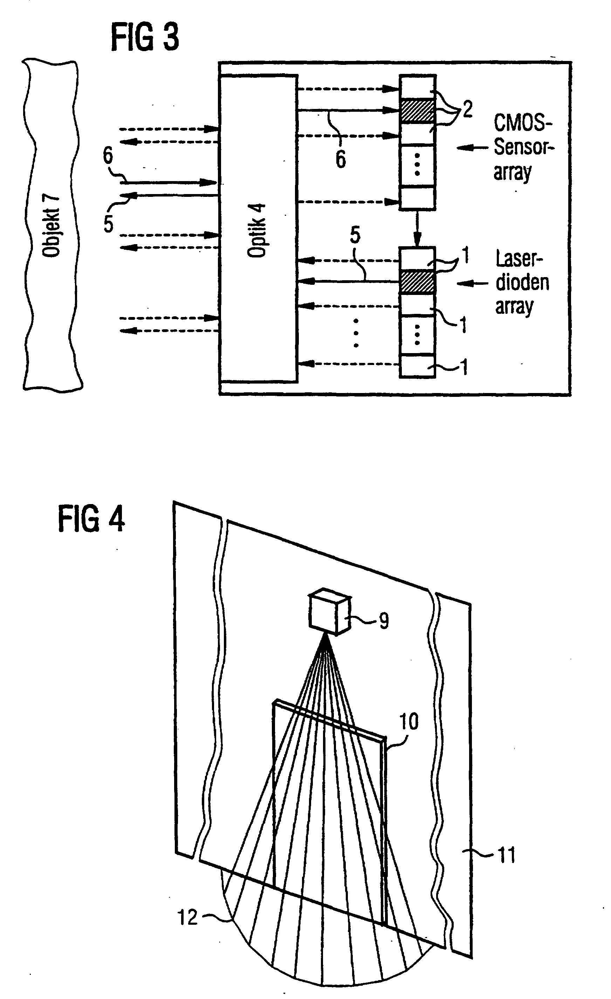

In der Figur 3 ist schematisch die Wirkungsweise des Laserdioden-Arrays als Beleuchtungseinheit, der Optik 4 und des CMOS-Sensor-Arrays auf der Empfangsseite dargestellt. Die zeichnerisch herausgehobene Lichtquelle 1 des Laserdioden-Arrays sendet einen Beleuchtungsstrahl 5 aus, der über die Optik 4 zum Objekt 7 geführt wird. Der reflektierte Abbildungsstrahl 6 wird über die Optik 4 entsprechend auf ein zur vorgenannten Lichtquelle 1 korrespondierendes Empfangselement 2 geleitet, welches ebenfalls in Figur 3 zeichnerisch hervorgehoben ist. Die aktuell betrachteten bzw. aktiven Beleuchtungs- 5 und Abbildungsstrahlen 6 sind in Figur 3 mit durchgezogenen Strichen dargestellt. Entsprechendes gilt für die durch unterbrochene Striche dargestellten Strahlen, die jedoch zeitlich versetzt vorhanden sind.

Mögliche Anwendungsgebiete von ortsauflösenden Abstandsmeßsystemen sind die Geschwindigkeitsmessung, die Fahrzeugidentifizierung, die Sicherheitsüberwachung, die Bahnsteigüberwachung, die Bahnübergangsüberwachung, Materialflußmessung auf Transportbändern oder Automatisierung von Krananlagen durch dreidimensionale Positionsbestimmung.

In Figur 4 wird die intelligente Überwachung einer Gebäudeeingangstür skizziert. Die Sende/Empfangseinheit 9 ist über eine Haustür 10 eines Hauses 11 angebracht. Die Auftreffpunkte der entsprechenden Lichtstrahlen auf dem Boden sind in Figur 4 in Form eines Halbkreises 12 angeordnet. Sie decken somit den Bereich vor der Haustür 10 ab. Nachdem das Abstandsmeßsystem in diesem Fall eine partielle Beleuchtung eines vor der Haustür 10 auftauchenden Objektes vornimmt, kann die Kontur des Objektes ausgewertet und kategorisiert werden. Somit läßt sich beispielsweise feststellen, ob sich ein Hund, eine Katze oder ein Mensch vor der Tür befindet. Eine vollflächige Beleuchtung des Objektes ist in diesem Fall nicht notwendig. Für die Überwachung von anders gearteten Objekten lassen sich entsprechende Anordnungen der Strahlengänge definieren. Entsprechend der Ausgestaltung in Figur 4 ist die Anordnung der Lichtquellen 1 sowie die Anordnung der Empfangselemente 2 ebenfalls halbkreisförmig. Zusätzlich kann jeder Strahlengang gezielt durch eine entsprechend ausgebildete Optik geführt werden.

## Patentansprüche

1. Ortsauflösendes Abstandsmeßsystem mit dem pixelweise Lichtlaufzeitmessungen durchführbar sind, bestehend aus:
- einer ein- oder zweidimensionalen Anordnung von modulierbaren Lichtquellen (1),
- einem Festkörperbildwandler (3, 31) mit Empfangselementen (2), die bezüglich der Anordnung eine Korrespondenz mit den Lichtquellen (1) aufweisen,
- einer Optik (4) zur Führung von Beleuchtungs- (5) und Abbildungsstrahlen (6) zwischen seriell, einzeln oder in Gruppen ansteuerbaren Lichtquellen (1), dazu korrespondierenden Objektpunkten und mit den Lichtquellen (1) korrespondierend angesteuerten Empfangselementen (2), wobei der Abstand von jedem Objektpunkt zu dem entsprechenden Empfangselement (2) des Festkörperbildwandlers (3, 31) anhand einer Lichtlaufzeitmessung ermittelbar ist

2. Ortsauflösendes Abstandsmeßsystem nach Anspruch 1, wobei die Korrespondenz zwischen den Anordnungen der Lichtquellen (1) und den Empfangselementen (2) durch den Einsatz eines Teilerspiegels (8) und einer Optik (4) gegeben ist.

3. Ortsauflösendes Abstandsmeßsystem nach einem der vorhergehenden Ansprüche, wobei bei größeren Entfernungen zwischen einem Objekt (7) und dem Abstandsmeßsystem die Anordnungen der Lichtquellen (1) und der Empfangselemente (2) unmittelbar nebeneinander positioniert sind und ihre Front in Richtung auf das Objektes (7) ausgerichtet ist.

4. Ortsauflösendes Abstandsmeßsystem nach einem der vorhergehenden Ansprüche, wobei die Lichtquellen (1) wahlfrei ansteuerbar und die korrespondierenden Empfangselemente (2) wahlfrei auslesbar sind.

5. Ortsauflösendes Abstandsmeßsystem nach einem der vorhergehenden Ansprüche, wobei eine Optik (4) im Strahlengang des Beleuchtungs-(5) and des Abbildungsstrahles (6) derart ausgeführt ist, daß entweder eine Lichtquelle (1) mit einem Empfangselement (2) korrespondiert, mehrere Lichtquellen (1) mit einem Empfangselement (2) korrespondieren oder eine Lichtquelle (1) zu mehreren Empfangselementen (2) korrespondiert.

6. Ortsauflösendes Abstandsmeßsystem nach einem der vorhergehenden Ansprüche, wobei die Teilung innerhalb der Anordnungen der Lichtquellen (1) und der Empfangselemente (2) gleich ist.

7. Ortsauflösendes Abstandsmeßsystem nach einem der vorhergehenden Ansprüche, wobei die Anordnung der Lichtquellen (1) und die Anordnung der Empfangselemente (2) in Form jeweils einer rechtwinkligen Matrix dargestellt sind.

8. Ortsauflösendes Abstandsmeßsystem nach einem der vorhergehenden Ansprüche, wobei die Anordnung der Lichtquellen (1) und die Anordnung der Empfangselemente (2) aufgabenspezifisch ausgeführt sind.

9. Ortsauflösendes Abstandsmeßsystem nach Anspruch 8, wobei die Anordnung der Lichtquellen (1) und die Anordnung der Empfangselemente (2) durch eine Zeile, einen Vollkreis, einen Halbkreis oder Kreuz dargestellt sind.

10. Ortsauflösendes Abstandsmeßsystem nach einem der vorhergehenden Ansprüche, wobei ein Schnittbild oder ein dreidimensionales Bild eines Objektes (7) generiert wird.

11. Ortsauflösendes Abstandsmeßsystem nach einem der vorhergehenden Ansprüche, wobei die Lichtquellen (1) durch schnell modulierbare Laserdioden oder Leuchtdioden dargestellt sind.

12. Ortsauflösendes Abstandsmeßsystem nach einem der vorhergehenden Ansprüche, wobei der Festkörperbildwandler (3,31) durch einen CMOS-Bildwandler dargestellt ist.

13. Ortsauflösendes Abstandsmeßsystem nach einem der vorhergehenden Ansprüche, wobei die Lichtlaufzeitmessung eine Pulslaufzeitmessung oder eine Phasenmessung ist.

14. Ortsauflösendes Abstandsmeßsystem nach einem der vorhergehenden Ansprüche zur intelligenten Gebäudeeingangssicherung, Bahnsteigüberwachung, Bahnübergangsüberwachung oder Fahrzeugüberwachung.

15. Ortsauflösendes Abstandsmeßsystem nach einem der vorhergehenden Ansprüche zur Überwachung von Innenräumen von Gebäuden oder Fahrzeugen.

## Claims

1. Spatially resolving range-finding system with the aid of which light travel time measurements can be carried out in a pixelwise fashion, comprising:
- a one- or two-dimensional arrangement of modulable light sources (1),
- a solid state image converter (3, 31) with receiving elements (2) which exhibit a correspondence to the light sources (1) with reference to the arrangement,
- an optical system (4) for guiding illuminating beams (5) and imaging beams (6) between light sources (1) which can be driven serially, individually or in groups, object points corresponding thereto, and receiving elements (2) driven correspondingly with the light sources (1), it being possible to determine the range from each object point to the corresponding receiving element (2) of the solid state image converter (3, 31) with the aid of a light travel time measurement.

2. Spatially resolving range-finding system according to Claim 1, in which the correspondence between the arrangements of the light sources (1) and the receiving elements (2) is given by the use of a divider mirror (8) and an optical system (4).

3. Spatially resolving range-finding system according to one of the preceding claims, in which, in the case of relatively large ranges between an object (7) and the range-finding system, the arrangements of the light sources (1) and the receiving elements (2) are positioned immediately next to one another and their front is aligned in the direction of the object (7).

4. Spatially resolving range-finding system according to one of the preceding claims, in which the light sources (1) can be driven optionally, and the corresponding receiving elements (2) can be read out optionally.

5. Spatially resolving range-finding system according to one of the preceding claims, in which an optical system (4) in the beam path of the illuminating beam (5) and the imaging beam (6) is designed in such a way that either one light source (1) corresponds to one receiving element (2), several light sources (1) correspond to one receiving element (2) or one light source (1) corresponds to several receiving elements (2).

6. Spatially resolving range-finding system according to one of the preceding claims, in which the division is the same within the arrangements of the light sources (1) and the receiving elements (2).

7. Spatially resolving range-finding system according to one of the preceding claims, in which the arrangement of the light souxces (1) and the arrangement of the receiving elements (2) are represented in the form of a rectangular matrix in each case.

8. Spatially resolving range-finding system according to one of the preceding claims, in which the arrangement of the light sources (1) and the arrangement of the receiving elements (2) are designed in a fashion matched to the task.

9. Spatially resolving range-finding system according to Claim 8, in which the arrangement of the light sources (1) and the arrangement of the receiving elements (2) are represented by a line, a full circle, a semicircle or cross.

10. Spatially resolving range-finding system according to one of the preceding claims, in which a sectional view or a three-dimensional image of an object (7) is generated.

11. Spatially resolving range-finding system according to one of the preceding claims, in which the light sources (1) are represented by rapidly modulable laser diodes or light-emitting diodes.

12. Spatially resolving range-finding system according to one of the preceding claims, in which the solid state image converter (3, 31) is represented by CMOS image converter.

13. Spatially resolving range-finding system according to one of the preceding claims, in which the light travel time measurement is a pulse travel time measurement or a phase measurement.

14. Spatially resolving range-finding system according to one of the preceding claims for the purpose of intelligent building entrance safeguarding, railroad platform surveillance, railroad grid crossing surveillance or vehicle surveillance.

15. Spatially resolving range-finding system according to one of the preceding claims for the purpose of surveillance of interiors of buildings or vehicles.

## Revendications

1. Système de mesure de distance à résolution locale, avec lequel des mesures du temps de propagation de la lumière sont réalisables par pixel, comprenant :
- un dispositif à une ou à deux dimensions de sources de lumière modulables (1),
- un convertisseur d'images à corps solide (3, 31) muni d'éléments de réception (2) qui, en ce qui concerne leur disposition, présentent une correspondance avec les sources de lumière (1),
- une optique (4) pour le guidage de rayons d'éclairement (5) et de rayons d'image (6) entre des sources de lumière (1) commandables en série, individuellement ou en groupes, avec des points objets correspondants et avec des éléments de réception (2) commandés de manière correspondante aux sources de lumière (1), la distance entre chaque point objet et l'élément de réception correspondant (2) du convertisseur d'images à corps solides (3, 31) étant détectable à l'aide d'une mesure du temps de propagation de la lumière.

2. Système de mesure de distance à résolution locale selon la revendication 1, la correspondance entre les dispositif des sources de lumière (1) et les éléments de réception (2) étant donnée par l'utilisation d'un miroir diviseur (8) et d'une optique (4).

3. Système de mesure de distance à résolution locale selon l'une quelconque des revendications précédentes, les dispositifs des sources de lumière (1) et des éléments de réception (2) étant positionnés directement les uns à côté des autres en cas de grandes distances entre un objet (7) et le système de mesure de distance, et leur face étant dirigée en direction de l'objet (7).

4. Système de mesure de distance à résolution locale selon l'une quelconque des revendications précédentes, les sources de lumière (1) étant commandables de manière aléatoire et les éléments de réception (2) correspondants étant lisibles de manière aléatoire.

5. Système de mesure de distance à résolution locale selon l'une quelconque des revendications précédentes, une optique (4) étant exécutée de telle manière dans la trajectoire du rayon d'éclairement (5) et du rayon d'image (6) que soit une source de lumière (1) correspond à un élément de réception (2), soit plusieurs sources de lumière (1) correspondent à un élément de réception (2), soit une source de lumière (1) correspond à plusieurs éléments de réception (2).

6. Système de mesure de distance à résolution locale selon l'une quelconque des revendications précédentes, la division dans les dispositifs des sources de lumière (1) et la division dans les éléments de réception (2) étant identiques.

7. Système de mesure de distance à résolution locale selon l'une quelconque des revendications précédentes, le dispositif des sources de lumière (1) et le dispositif des éléments de réception (2) étant représentés sous la forme respective d'une matrice à angles droits.

8. Système de mesure de distance à résolution locale selon l'une quelconque des revendications précédentes, le dispositif des sources de lumière (1) et le dispositif des éléments de réception (2) étant exécutés de manière spécifique à la tâche.

9. Système de mesure de distance à résolution locale selon la revendication 8, le dispositif des sources de lumière (1) et le dispositif des éléments de réception (2) étant représentés par une ligne, un cercle entier, un demi-cercle ou une croix.

10. Système de mesure de distance à résolution locale selon l'une quelconque des revendications précédentes, une image en section ou une image en trois dimensions d'un objet (7) étant générée.

11. Système de mesure de distance à résolution locale selon Tune quelconque des revendications précédentes, les sources de lumière (1) étant représentées par des diodes laser ou des diodes luminescentes rapidement modulables.

12. Système de mesure de distance à résolution locale selon Tune quelconque des revendications précédentes, le convertisseur d'images à corps solides (3, 31) étant représenté par un convertisseur d'images CMOS.

13. Système de mesure de distance à résolution locale selon l'une quelconque des revendications précédentes, la mesure du temps de propagation de la lumière étant une mesure du temps de propagation d'impulsion ou une mesure de phase.

14. Système de mesure de distance à résolution locale selon Tune quelconque des revendications précédentes, destiné à la protection intelligente d'entrées de bâtiments, à la surveillance de quais, à la surveillance de passages à niveau ou au contrôle de véhicules.

15. Système de mesure de distance à résolution locale selon Tune quelconque des revendications précédentes, destiné à la surveillance de pièces intérieures de bâtiments ou de véhicules.
